# EUROPÄISCHE PATENTSCHRIFT

(11) **EP 0 774 398 B1**
(45) Veröffentlichungstag und Bekanntmachung des Hinweises auf die Patenterteilung: **17.03.1999**
(21) Anmeldenummer: 96112223.1
(22) Anmeldetag: 29.07.1996
(51) Int. Cl.: B62B 5/02, B62B 5/04

(54) **Rolltreppengängiger Transportwagen**
Trolley adapted for escalators
Chariot adapté pour des escaliers roulants

(30) Priorität: 14.11.1995 DE 19542310; 14.11.1995 DE 19546748
(43) Veröffentlichungstag der Anmeldung: 21.05.1997
(73) Patentinhaber: WANZL METALLWARENFABRIK GMBH, D-89336 Leipheim (DE)
(72) Erfinder: Eberlein, Herbert, 89347 Bubesheim (DE)

(56) Entgegenhaltungen:
- DE-U- 9 302 370
- FR-A- 2 527 155

## Beschreibung

Die Erfindung betrifft einen von Hand bewegbaren, rolltreppengängigen und wahlweise auch fahrsteigtauglichen Transportwagen mit einem Fahrgestell, das wenigstens eine zum Abstellen von Gegenständen bestimmte Abstellzone aufweist und mit einer Schiebeeinrichtung, die mit einer auf die hinteren Räder des Transportwagens einwirkenden Bremseinrichtung so verbunden ist, daß beim Loslassen der Schiebeeinrichtung die hinteren Räder gebremst und bei Betätigung der Schiebeeinrichtung die Bremswirkung aufgehoben werden kann.

Rolltreppengängige Transportwagen dieser Art werden z.B. am Flughafen Frankfurt/Main eingesetzt. Dort befinden sich Rolltreppen, auf denen die rolltreppengängigen Transportwagen, sogenannte Kofferkulis, mit und ohne Gepäck beladen von Stockwerk zu Stockwerk befördert werden können. Diese mit einer vorderen Lenkrolle und mit zwei hinteren Rädern ausgestatteten Transportwagen sind mit einer Schiebeeinrichtung ausgestattet, die mit einer auf die hinteren Räder einwirkenden Bremseinrichtung so verbunden ist, daß durch Verschwenken der bügelförmigen Schiebeeinrichtung die Bremswirkung beeinflußbar ist. Läßt man die Schiebeeinrichtung los, ist der Transportwagen gebremst. Verschwenkt man die Schiebeeinrichtung nach oben oder unten, so läßt sich die Bremsung lösen und der Transportwagen kann geschoben oder gezogen werden. Um einen Transportwagen über eine laufende Rolltreppe befördern zu können, weisen die Transportwagen Stützmittel auf welche die Transportwagen auf der Rolltreppe vor einem Herabstürzen bewahren. Alle bisher bekannten Transportwagen, die auf Rolltreppen oder auch auf Fahrsteigen befördert werden, haben den Nachteil, daß sie, am Ausgang einer Rolltreppe oder eines Fahrsteiges angekommen, spätestens dann nicht mehr weiterbefördert werden, wenn die hinteren Räder an den am Ausgang der Rolltreppe befindlichen Kamm anstoßen. Der Benutzer eines derartigen Transportwagens muß immer den Wagen mit den hinteren Rädern über den Kamm schieben. Alleine findet der Transportwagen mit den hinteren Rädern nicht über den Kamm. Dieser Mangel führt zu kritischen Situationen dann, wenn die Benutzer der Transportwagen, am Ende der Rolltreppen angekommen, vergessen, den Wagen über den Kamm zu schieben. Sie werden von den weiterlaufenden Rolltreppenstufen gegen den Wagen gedrückt, versuchen durch Rückwärtslaufen dem entstandenen Hindernis auszuweichen und schaffen es in der entstandenen Hektik nur unter großen Mühen, den Transportwagen über den Kamm zu schieben. Um solche mißlichen Situationen auf ein Mindestmaß zu beschränken, sind die als Bügel gestalteten Schiebeeinrichtungen nach unten abgekröpft, so daß, unter Ausnutzung des entstandenen Hebelarmes, das Lösen der auf die hinteren Räder einwirkenden Bremskraft relativ leicht möglich ist. Ein selbständiges Herausbefördern eines Transportwagens aus einer Rolltreppe, ohne menschliche Hilfe, vermag aber die eben geschilderte Maßnahme nicht zu bewirken.

Zum Stand der Technik zählt auch ein zum Befördern auf Fahrsteigen und Rolltreppen geeigneter Transportwagen, der in der DE 195 17 729 A1 beschrieben wird. Das Problem, das mit der Entwicklung dieses Transportwagens gelöst werden soll besteht darin, daß Transportwagen beim Verlassen der Fahrsteige oder Rolltreppen an den am Ende der Förderbahn befindlichen Kämme entweder dann hängenbleiben können, wenn der Gesamtschwerpunkt der Transportwagen relativ hoch und relativ weit vorne angeordnet ist und/oder wenn die Schubkraft der hinteren gebremsten Räder nicht ausreicht, die vorne, gewöhnlich als Lenkrolle gestaltete Rolle über den Kamm zu heben. Zur Lösung des Problems wird vorgeschlagen, eine Einrichtung derart vorzusehen, daß bei nichtbetätigter Bremseinrichtung ein durch das sich bewegende Fahrsteigband bedingte Rückwärtsdrehen der hinteren Räder vermieden und ein Vorwärtsdrehen nur gegen die Wirkung der von der Bremseinrichtung aufgebrachten Bremskraft möglich ist. Dreht sich das Rad nicht rückwärts, kann es eine Schubkraft entwickeln und die vordere Rolle des Transportwagens über den Kamm des Fahrsteiges drükken. Transportwagen, die mit der geschilderten Einrichtung ausgestattet sind, haben gewöhnlich keine Schwierigkeiten, mit ihren vorderen Rollen über die Kämme zu setzen. Die Einrichtung vermag aber ebenfalls nicht das automatische Herausbefördern eines Transportwagens aus einer Rolltreppe ohne menschliche Hilfe zu bewirken, da die hinteren Räder beim Erreichen des Kammes ihre Schubkraft verlieren und sich deshalb nicht von selbst vom Fahrsteig- oder Rolltreppenband lösen können.

Die Aufgabe der Erfindung besteht darin, einen gattungsgemäßen Transportwagen so weiterzuentwickeln, daß ein Übersetzen der hinteren Räder über den Kamm einer Rolltreppe oder eines Fahrsteiges erleichtert wird.

Als Lösung der Aufgabe wird vorgeschlagen, daß jedem hinteren Rad ein ihm vorauseilendes, um eine horizontale Achse verschwenkbares Fühlerorgan zugeordnet ist, das mit einem Druckteil und mit einem Bremsteil in Verbindung steht, wobei die Verbindung von Fühlerorgan, Bremsteil und Druckteil so gewählt ist, daß bei einem Anheben des Fühlerorganes das Bremsteil gegen den Boden gepreßt und das Druckteil auf die Bremseinrichtung so einwirkt, daß die Bremswirkung auf das jeweilige hintere Rad aufgehoben und durch die Bremswirkung des Bremsteiles ersetzt wird.

Der Vorteil der Erfindung zeigt sich dann, wenn sich die hinteren Räder eines auf einer Rolltreppe stehenden Transportwagens dem am Ende der Rolltreppe befindlichen Kamm nähern. Dann nämlich erreichen die beiden Fühlerorgane zuerst den Kamm und werden unter Abstützung an dessen ansteigender Fläche angehoben, während sich die beiden Räder noch auf den sich bewegenden Stufen der Rolltreppe befinden. Durch das Anheben der Fühlerorgane werden die hinter den Rädern angeordneten Bremsteile gegen eine Rolltreppenstufe gedrückt, wobei gleichzeitig die Druckteile gegen die beiden nach unten zu den Rädern führenden Bremsgestänge bewegt werden und diese nach oben drücken, so daß die auf die hinteren Räder einwirkenden Bremskräfte aufgehoben sind. Da jedoch die Bremsteile gegen die Rolltreppenstufe gedrückt sind, wirken diese schiebend auf den Transportwagen und bewegen dessen nun frei sich drehenden hinteren Räder so weit über den Kamm oder den Kammbeginn, bis die Fühlerorgane in etwa wieder jene Position eingenommen haben, die sie vor Erreichen des Kammes inne hatten. In dieser Position sind die Bremsteile wieder vom Boden bzw. von der Rolltreppenstufe abgehoben und die Druckteile haben sich von der Bremseinrichtung gelöst. Dadurch kann die von der Schiebeeinrichtung aus auf die hinteren Räder wirkende Bremseinrichtung in Funktion treten und die hinteren Räder bremsen. Da diese Bremseinwirkung dann eintritt, wenn sich die hinteren Räder bereits auf dem Kamm der Rolltreppe befinden, rollen diese, und damit der Transportwagen, nicht mehr zurück auf die sich bewegenden Rolltreppenstufen. Der Transportwagen wird somit in vorteilhafter Weise mit allen seinen Rädern komplett über den Kammbeginn geschoben und anschließend arretiert. Diese Wirkung tritt z.B. ein, wenn man den Transportwagen auf der Rolltreppe sich selbst überläßt. Verbessert wird dieses Verhalten natürlich noch dann, wenn man beim Übersetzen der hinteren Räder über den Kamm wieder mit dem Schieben des Transportwagens beginnt. Die vorgeschlagene Erfindung ist somit als Aushebehilfe zu verstehen, die das Herausfahren des Transportwagens aus einer Rolltreppe in vorteilhafter Weise wesentlich erleichtert und dadurch die eingangs geschilderten kritischen Situationen vermeiden hilft.

Gemäß einer Ausgestaltung der Erfindung wird vorgeschlagen, das Bremsteil als ein nur in Schieberichtung des Transportwagens sich drehendes Schubrad zu gestalten. Dies ist dann von Nutzen, wenn die geometrischen Verhältnisse am Zugang zur Rolltreppe zwischen dem Kamm und den Rolltreppenstufen so sind, daß befürchtet werden muß, daß beim Einfahren des Transportwagens auf die Rolltreppe das Fühlerorgan der hinteren Räder etwas angehoben wird, und dadurch das Bremsteil eines jeden Rades so weit abgesenkt wird, daß es am Kamm streift, ja sogar bremsend wirkt und dadurch den Einfahrvorgang des Transportwagens behindert. Da jedoch das Bremsteil als einseitig drehbares Schubrad gestaltet ist, rollt es bei einem möglichen Aufsetzen auf den Kamm auf diesem ab und der Transportwagen läßt sich leicht auf die Rolltreppe schieben. Da sich das Schubrad nur in Schieberichtung des Transportwagens drehen läßt, kann es beim Ausfahren des Transportwagens aus der Rolltreppe von den sich bewegenden Rolltreppenstufen nicht nach rückwärts, also nicht entgegen der Schieberichtung des Transportwagens gedreht werden. Es blockiert vielmehr, hat somit die Wirkung eines starr angeordneten Bremsteiles und hilft so den Transportwagen über den Kamm zu schieben.

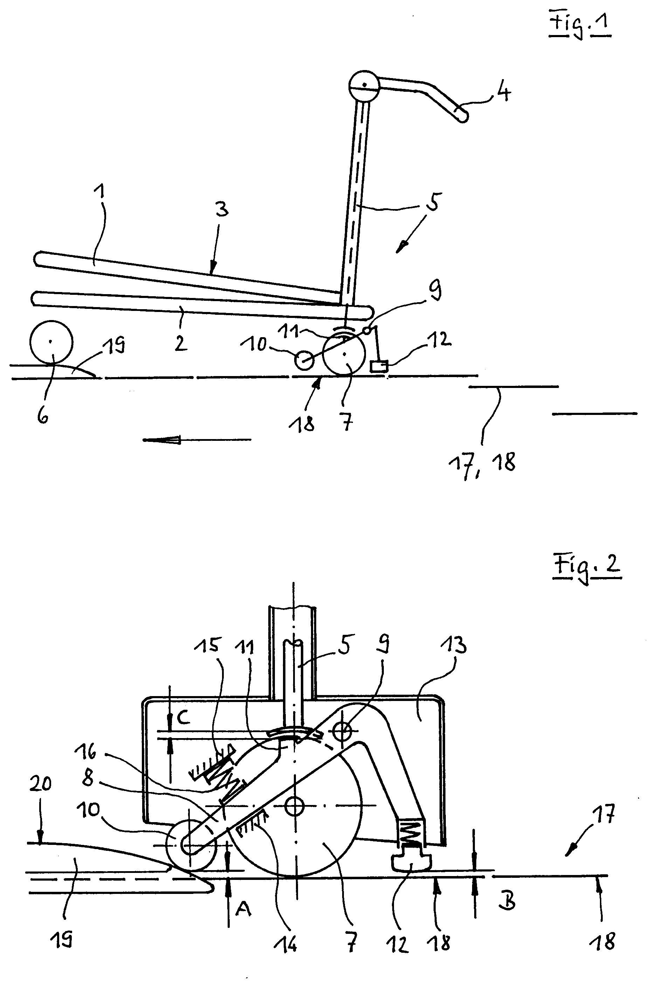

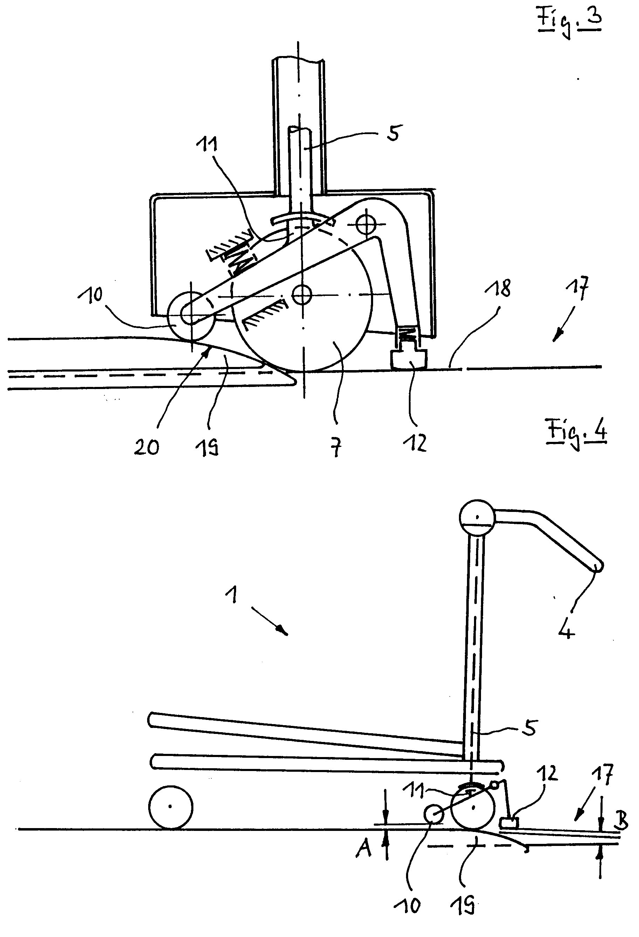

An dieser Stelle sei noch auf Tragrollen verwiesen, die in der deutschen Patentschrift DE 29 08 793 C2 beschrieben sind. Bei dem in Fig. 2 gezeigten Ausführungsbeispiel wird vorgeschlagen, vor einer Tragrolle eines Transportwagens ein Ausheberad und hinter der Tragrolle ein Rollenabstützstück vorzusehen, das dann in Funktion tritt, wenn sich die Tragrolle auf einem Fahrsteig befindet und die beiden Laufräder dieser Tragrolle in die Rillen des Fahrsteigbandes eingetaucht sind. Sobald das Ausheberad am Kamm aufläuft, hebt es die Tragrolle zusammen mit dem Rollenabstützstück an, so daß dieses seine Bremswirkung verliert. Gleiches gilt auch bei der in Fig. 3 der genannten Schrift beschriebenen Tragrolle, die vorne und hinten je ein Ausheberad aufweist. Diese Anordnung läßt es zu, daß bei gleicher Aushebewirkung der Transportwagen auf den Fahrsteig sowohl geschoben, als auch, um 180° gedreht, gezogen werden kann. Die beiden beschriebenen Anordnungen sind jedoch nicht in der Lage, die der hier vorliegenden Erfindung zugrunde liegende Aufgabe zu lösen, da die Tragrollen lediglich angehoben, nicht aber durch irgendwelche Bremsteile ohne menschliche Hilfe ein Stück weit über den Kamm aus der Rolltreppe herausgeschoben werden. Ferner wirken auf diese Tragrollen keine Bremseinrichtungen.

Die Erfindung wird anhand zweier Ausführungsbeispiele näher erläutert. Es zeigt
- Fig. 1: einen auf einer Rolltreppe befindlichen Transportwagen, der im Begriff ist, die Rolltreppe zu verlassen;
- Fig. 2: im Detail ein hinteres Rad, dessen Fühlerorgan eben am Kamm der Rolltreppe aufläuft;
- Fig. 3: im Detail das gleiche hintere Rad, das sich noch auf einer Rolltreppenstufe befindet, dessen Fühlerorgan jedoch vom Kamm bereits angehoben ist;
- Fig. 4: den gleichen Transportwagen, der die Rolltreppe so weit verlassen hat, daß sich die hinteren Räder bereits auf dem Kamm der Rolltreppe befinden, sowie
- Fig. 5 und Fig. 6: in etwa die gleiche Konstruktion wie in Fig. 2 und 3 beschrieben, jedoch mit einem Bremsteil das als einseitig drehbares Schubrad gestaltet ist.

Sowohl der Transportwagen 1, als auch die Rolltreppe 17 sind der Einfachheit halber in den nachfolgenden Zeichnungen schematisch dargestellt.
Fig. 1 zeigt einen rolltreppengängigen Transportwagen 1 auf einer z.B. nach oben führenden Rolltreppe 17. Der voll Hand bewegbare rolltreppengängige Transportwagen 1, der als üblicher 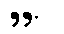 Kofferkuli", Gepäckwagen oder auch Einkaufswagen gestaltet sein kann, weist ein Fahrgestell 2 auf, das mit wenigstens einer zum Abstellen von Ware oder Gegenständen bestimmten Abstellzone 3 ausgestattet ist. Der Transportwagen 1 weist ferner eine Schiebeeinrichtung 4 auf, die mit einer auf die hinteren Räder 7 des Transportwagens 1 einwirkenden Bremseinrichtung 5 so verbunden ist, daß beim Loslassen der von Hand betätigbaren Schiebeeinrichtung 4 die hinteren Räder 7 gebremst und beim Betätigen oder Verschwenken der Schiebeeinrichtung 4 die Bremswirkung aufgehoben werden kann. Die oben beschriebene Anordnung ist bekannt, so daß an dieser Stelle weitere Einzelheiten nicht genannt zu werden brauchen. Aus der Zeichnung ist ersichtlich, daß sich das wenigstens eine vordere Laufrad 6, das gewöhnlich als Lenkrolle ausgebildet ist, bereits auf dem Kamm 19 der Rolltreppe 17 befindet, während die beiden hinteren Räder 7 noch auf einer Rolltreppenstufe 18 abgestützt sind. Der Pfeil gibt die Laufrichtung der Rolltreppenstufen 18 an. Da die hinteren Räder 7 gebremst sind, wird der Transportwagen 1 von der laufenden Rolltreppe 17 in Pfeilrichtung befördert. An jedem hinteren Rad 7 ist ein den, Rad 7 vorauseilendes Fühlerorgan 10 angeordnet, das mit einem Druckteil 11 und mit einem Bremsteil 12 in Verbindung stellt. Die so gebildete Anordnung ist um eine horizontale Achse 9 begrenzt verschwenkbar. Die Verbindung von Fühlerorgan 10, Bremsteil 12 und Druckteil 11 ist so gewählt, daß bei einem Anheben des Fühlerorganes 10 das Bremsteil 12 gegen den Boden gepreßt und das Druckteil 11 auf die Bremseinrichtung 5 so einwirkt, daß die Bremswirkung der Bremseinrichtung 5 aufgehoben und durch die Bremswirkung des Bremsteiles 12 ersetzt ist, vgl. auch Fig. 2. Durch die laufende Rolltreppe 17 werden die hinteren Räder 7 zum Kamm 19 der Rolltreppe 17 befördert.
Fig. 2 zeigt nun jenen Moment, bei dem die Fühlerorgane 10 der beiden hinteren Räder 7 am Kamm 19 der Rolltreppe 17 anstoßen. Die nachfolgende Beschreibung bezieht sich der Einfachheit halber nur auf ein hinteres Rad 7, ohne das andere hintere Rad 7 auszuschließen. Das Fühlerorgan 10 ist zweckmäßigerweise als ein kleines, um eine horizontale Achse drehbar gelagertes Rad gestaltet, das von einem Schwenkarm 8 getragen wird, der um die horizontale Achse 9 begrenzt verschwenkbar ist. Die horizontale Achse 9 ist durch einen Achsbolzen oder einen Achszapfen gebildet, der nahe des hinteren Rades 7 in vorteilhafter Weise bevorzugt an der hinteren aus Blech bestehenden Radverkleidung 13 befestigt ist. Im Beispiel ist der Schwenkarm 8 neben dem hinteren Rad 7 angeordnet. Ebenfalls bevorzugt an der Radverkleidung 13 sind ein Anschlag 14 und eine gegenüber einem weiteren Anschlag 15 abgestützte Druckfeder 16 vorgesehen. Diese Anordnung bewirkt eine Begrenzung des Schwenkbereiches des Schwenkarmes 8. Die Druckfeder 16 ist bestrebt, den Schwenkarm 8 gegen den Anschlag 14 zu drücken. Ein Anheben oder Bewegen des Schwenkarmes 8 ist nur gegen die Wirkung der Druckfeder 16 möglich. Der Schwenkarm 8 ist im Beispiel als zweiarmiger Hebel gestaltet, der an einem Hebelarm das Fühlerorgan 10 und das Druckteil 11 und am anderen Hebelarm das bevorzugt federbelastete Bremsteil 12 trägt. Aufjenem Hebelarm, der das Fühlerorgan 10 trägt, ist ein ortsfest mit dem Schwenkarm 8 verbundenes Druckteil 11 vorgesehen, das nach oben gerichtet ist und zur Bremseinrichtung 5 führt. Das Fühlerorgan 10, das Bremsteil 12 sowie das Druckteil 11 sind am Schwenkarm 8 so angeordnet, daß dann, wenn sich das hintere Rad 7 auf einer ebenen Fahrbahn befindet, das Fühlerorgan 10 in einem Abstand A und das Bremsteil 12 in einem Abstand B zur Fahrbahn angeordnet sind und das Druckteil 11 einen Abstand C zur Bremseinrichtung 5 einnimmt und auf diese somit keine Wirkung ausübt. Beim Loslassen der Schiebeeinrichtung 4 wird das hintere Rad 7 durch die Bremseinrichtung 5 gebremst. Befindet sich also der Transportwagen 1 auf einer Rolltreppe 17, so wird der Wagen 1 durch die gebremsten hinteren Räder 7 von der Rolltreppe 17 zum Kamm 19 bewegt. Anhand der Zeichnungen ist es leicht vorstellbar, wie das Fühlerorgan 10 nach dem Anstoßen an den Kamm 19, dem ansteigenden Umriss 20 des Kammes 19 folgend angehoben und damit ein kleines Stück um die horizontale Achse 9 verschwenkt wird. Durch das Anheben des Fühlerorganes 10 verschwenkt somit auch der Schwenkarm 8 mit der Wirkung, daß das Bremsteil 12 nach unten wandert und gegen den Boden, im vorliegenden Falle also gegen die Trittfläche einer Rolltreppenstufe 18 gedrückt wird. Ebenso ist durch das Verschwenken des Schwenkarmes 8 nach oben auch das Druckteil 11 nach oben gewandert und befindet sich so im Eingriff mit der Bremseinrichtung 5, daß deren auf das hintere Rad 7 einwirkende Bremskraft aufgehoben ist und das hintere Rad 7 frei drehbar ist. Die Bremswirkung der Bremseinrichtung 5 ist nun durch die Bremswirkung des Bremsteiles 12 ersetzt. Durch das Abstützen der Bremsteile 12 beider hinterer Räder 7 auf einer Rolltreppenstufe 18 rollen nun die beiden nicht gebremsten hinteren Räder 7 zumindest über den Beginn des Kammes 19.
Fig. 3 zeigt jenen Augenblick, bei dem das hintere Rad 7 am Kamm 19 anstößt. Das Fühlerorgan 10 ist angehoben, das Bremsteil 12 ist gegen die Rolltreppenstufe 18 gedrückt und das Druckteil 11 hält die Bremseinrichtung 5 in nicht wirksamer Lage. Anhand der Zeichnung ist es wieder gut vorstellbar, wie durch die laufende Rolltreppe 17 das hintere Rad 7 dem ansteigenden Umriss 20 des Kammes 19 folgend über diesen so lange weiterrollt, bis das Fühlerorgan 10 und das hintere Rad 7, bedingt durch den sich ändernden Umriss des Kammes 19, wieder eine Lage einnehmen, die in etwa den Abstand A, vgl. Fig. 2, entstehen lassen. Dadurch wird das Bremsteil 12 wieder vom Boden bzw. von der Rolltreppenstufe 18 abgehoben und das Druckteil 11 nimmt wieder den Abstand C zur Bremseinrichtung 5 ein, so daß diese etwa in jenem Maße, wie die Bremswirkung des Bremsteiles 12 aufgehoben wird, ihre Bremswirkung auf das hintere Rad 7 entfaltet. Dadurch wird das hintere Rad 7 gebremst und es kann vom Kamm 19 nicht mehr zurück auf die Rolltreppenstufe 18 rollen. Auf den Transportwagen 1 übertragen bedeutet dies, daß der Transportwagen 1 nicht mehr imstande ist, zurückzurollen. Die Erfindung ermöglicht also das vollständige Herausschieben des Transportwagens 1 aus einer laufenden Rolltreppe 17.

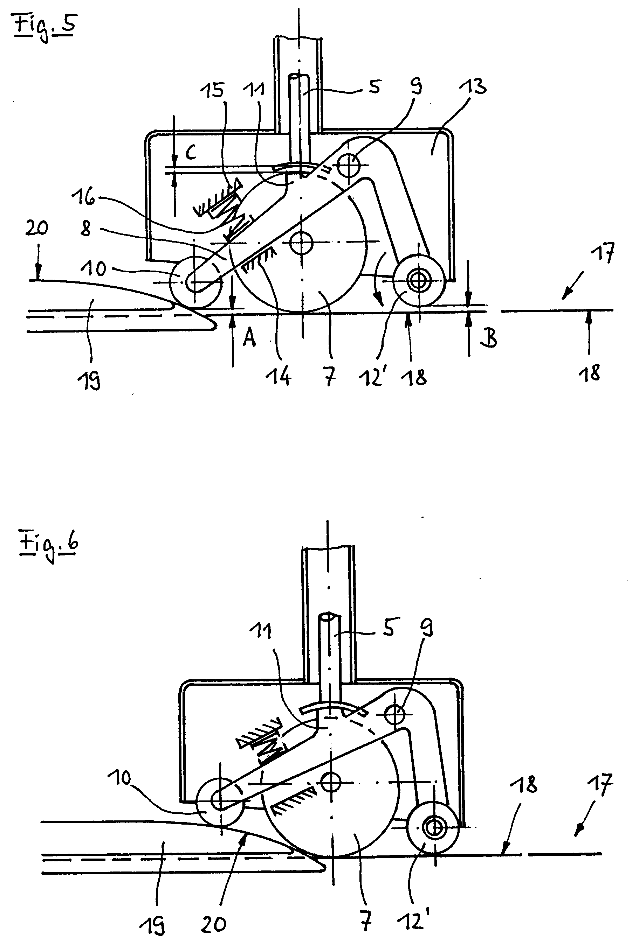

Fig. 4 zeigt den aus der Rolltreppe 17 herausbeförderten Transportwagen 1. Das Fühlerorgan 10 und das Bremsteil 12 sind wieder in einem Abstand A und B zur Fahrbahn angeordnet. Die Bremseinrichtung 5 hält den Transportwagen 1 gebremst. Durch Betätigen der Schiebeeinrichtung 4 und durch gleichzeitiges Schieben läßt sich der Transportwagen 1 von der Rolltreppe 17 wegfahren.

Gemäß einer äußerst zweckmäßigen Ausgestaltung der Erfindung zeigen die Ausführungsbeispiele nach Fig. 5 und 6 die gleichen Anordnungen und Betriebszustände wie in den Beispielen gemäß Fig. 2 und 3 beschrieben, jedoch lediglich mit dem Unterschied, daß pro hinterem Rad 7 das bisher als starres Teil gestaltete Bremsteil 12 durch ein bevorzugt kleiner als ein Rad 7 ausgebildetes Schubrad 12' ersetzt ist, das auf einer horizontalen Achse gelagert, am Schwenkarm 8 befestigt ist. Das Schubrad 12' ist der Wirkung einer einseitig wirkenden Drehsperre, beispielsweise eines bekannten Hülsenfreilaufes unterworfen, die so am oder im Schubrad 12' angeordnet ist, daß sich das Schubrad 12' nur in Schieberichtung des Transportwagens 1 drehen läßt. Auf der Zeichnung ist dies linksdrehend und durch einen Pfeil gekennzeichnet. Bei dem in Fig. 5 gezeigten Betriebszustand hat das Fühlerorgan 10 gerade den am Ende der Rolltreppe 17 befindlichen Kamm 19 erreicht und rollt nun über den ansteigenden Kamm 19. Gleichzeitig schwenkt das Schubrad 12' durch die bewegbare Lagerung des Schwenkarmes 8 nach unten und drückt gegen die Trittfläche einer Rolltreppenstufe 18. Würde es sich nun beim Schubrad 12' um ein beidseitig drehbares Rad handeln, würde dieses von den sich bewegenden Rolltreppenstufen 18 angetrieben werden und sich in der Zeichnung rechtsdrehend bewegen. Eine derartige Drehung ist jedoch durch die Wirkung des Freilaufes oder der einseitig wirkenden Drehsperre nicht möglich, so daß das Schubrad 12' blockiert ist und wie ein starres Bremsteil 12 wirkt. Somit entwickelt es eine Schubkraft und drückt das Rad 7 unter Mitwirkung der laufenden Rolltreppenstufen 18 automatisch ein Stück weit über den Kamm 19. Dies betrifft beide hinteren Räder 7. Erreicht das Schubrad 12' den Kamm 19, rollt es, sobald der Transportwagen 1 geschoben wird, über den Kamm 19. Unterläßt man das Schieben, stößt das Schubrad 12' an der Kammspitze an und verbleibt dort. Die hinteren Räder 7 rollen jedoch nicht mehr zurück auf die laufenden Rolltreppenstufen 18, denn jede mögliche Rückwärtsbewegung des Transportwagens 1 bewirkt wieder ein Verriegeln oder ein Sperren des Schubrades 12', so daß dieses zusammen mit dem Schubrad 12' des zweiten Rades 7 die Räder 7 und damit den Transportwagen 1 wieder nach vorne schieben. Da sich also das Schubrad 12' nur so dreht, wie sich die Räder 7 drehen, wenn der Transportwagen 1 geschoben wird, gibt es auch während des Einfahrens des Transportwagens 1 in die Rolltreppe 17 beim Überfahren des am Rolltreppeneingang befindlichen Kammes 19 keine Probleme. Sollte es, wie bereits eingangs erwähnt, beim Einfahren zu einer Berührung zwischen dem Schubrad 12' und dem Kamm 19 kommen, rollt das Schubrad 12' einfach auf dem Kamm 19 weiter.

Es bietet sich an, das Schubrad 12' auch als Abstützmittel zu nutzen, wenn der Transportwagen 1 auf einer Rolltreppe 17 nach oben befördert wird. Da sich die Schubräder 12' hinter den hinteren Rädern 7 befinden und sich nur in Schieberichtung des Transportwagens 1 drehen lassen, nehmen sie beim Bewegen des Transportwagens 1 aus der horizontalen Lage (Einfahrt in die Rolltreppe 17) in die ansteigende Lage automatisch die Funktion von starren Abstützmitteln wahr, da sie sich nicht rückwärts drehen lassen. Der Transportwagen 1 wird dadurch sicher auf einer nach oben führenden Rolltreppe 17 gehalten. Er rutscht oder stürzt nicht nach unten, da er nach hinten über die Schubräder 12' auf einer Rolltreppenstufe 18 abgestützt ist. Dadurch können die bisherigen an der Rückseite des Transportwagens 1 befindlichen starren und ortsfest angebrachten Stützmittel entfallen. Die Schubräder 12' sind damit in äußerst zweckmäßiger Weise in der Lage, zwei wichtige Funktionen wahrzunehmen.

Die Erfindung ist anhand von schematisch dargestellten Ausführungsbeispielen beschrieben worden. Es ist klar, daß es bei der praktischen Verwirklichung des erfinderischen Gedankens einer funktionellen Feinabstimmung zwischen den Bauteilen hinteres Rad 7, Fühlerorgan 10, Druckteil 11, Bremsteil 12 und Kamm 19 bedarf, um jenen Vorteil, den die Erfindung entstehen läßt, voll ausschöpfen zu können. Dies ist sehr wichtig, da die Kämme 19 bekannter Rolltreppen 17 unterschiedlich steil oder auch gekrümmt verlaufens gestaltet sind. Eine solche Feinabstimmung ist z.B. möglich, wenn zumindest das Fühlerorgan 10 und/oder auch das Bremsteil 12 in unterschiedlichen Positionen am Schwenkarm 8 befestigbar sind. Gleiches gilt auch für das Zusammenspiel von Bremsteil 12 und Bremseinrichtung 5. Um ein Zurückrollen des Transportwagens 1 vom Kamm 19 auf die Rolltreppenstufen 18 zu vermeiden, muß oder sollte das Zusammenspiel von Bremsteil 12 und Bremseinrichtung 5 so gewählt sein, daß beim Herabsenken des Fühlerorganes 10 in seine Ausgangslage (Abstand A) die Bremswirkung der Bremseinrichtung 5 kurz vorher eintritt, bevor die Bremswirkung des Bremsteiles 12 aufgehoben ist. Auch ist der Abstand zwischen dem Fühlerorgan 10 und dem Bremsteil 12 bezüglich des hinteren Rades 7 und des Kammes 19 so zu wählen, daß das Absenken des Fühlerorganes 10 in seine Ausgangslage (Abstand A) so erfolgt, daß das Bremsteil 12 rechtzeitig von der Rolltreppenstufe 18 abgehoben wird, bevor es an den Kamm 19 stößt. Alle diese Feinabstimmungen können vom Fachmann z.B. mit Hilfe von Federelementen vorgenommen werden. Dies betrifft insbesondere das Bremsteil 12.

Anzumerken bleibt ferner, daß der Schwenkarm 8 als ein gabelförmiges Teil gestaltet sein kann, dessen beide Gabelschenkel das hintere Rad 7 umfassen und das Fühlerorgan 10 zwischen sich angeordnet tragen. Von diesem gabelförmigen Schwenkarm 8 liefe dann ein Hebelarm zum Bremsteil 12 oder zum Schubrad 12'.

Das hintere Rad 7 kann auch als ein Zwillingslaufrad gestaltet sein, wobei dann der Schwenkarm 8 zwischen den beiden einzelnen Laufrädern angeordnet sein kann. Ebenso kann die Lagerung für den Schwenkarm 8 außerhalb der Radverkleidung 13, beispielsweise am Fahrgestell 2 des Transportwagens 1, vorgesehen sein.

Es soll nicht unerwähnt bleiben, daß auch die Bremseinrichtung 5 unterschiedlich gestaltet sein kann. Üblicherweise führen in aufrechten Holmen angeordnete federbeaufschlagte Bremsstangen voll der Schiebeeinrichtung 4 hinunter zu den hinteren Rädern 7. Anstelle von Bremsstangen sind federbeaufschlagte Seilzüge ebenso denkbar wie auch Bremseinrichtungen 5, die auf hydraulisch wirkender Basis aufgebaut sind.

Schließlich ist anzuführen, daß die am Beginn und am Ende einer Rolltreppe 17 befindlichen Kämme 19 so aufgebaut und gestaltet sind, wie dies z.B. in der europäischen Norm EN 115 beschrieben ist. Die Erfindung läßt sich auch bei Transportwagen 1 anwenden, die auf Fahrsteigen entsprechend der eben genannten Norm ebenfalls nach oben oder nach unten befördert werden sollen. Wenn also bisher von sogenannten 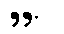 rolltreppengängigen" Transportwagen 1 die Rede war, so schließt das Wort 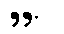 rolltreppengängig", bezogen auf die Patentansprüche, auch alle Transportwagen 1 ein, die sich mit Fahrsteigen befördern lassen, also 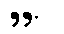 fahrsteigtauglich" sind.

## Patentansprüche

1. Von Hand bewegbarer, rolltreppengängiger und wahlweise fahrsteigtauglicher Transportwagen (1), mit einem Fahrgestell (2), das wenigstens eine zum Abstellen von Gegenständen bestimmte Abstellzone (3) aufweist und mit einer Schiebeeinrichtung (4), die mit einer auf die hinteren Räder (7) des Transportwagens (1) einwirkenden Bremseinrichtung (5) so verbunden ist, daß beim Loslassen der Schiebeeinrichtung (4) die hinteren Räder (7) gebremst und bei Betätigung der Schiebeeinrichtung (4) die Bremswirkung aufgehoben werden kann, dadurch **gekennzeichnet,** daß jedem hinteren Rad (7) ein vorauseilendes, um eine horizontale Achse (9) verschwenkbares Fühlerorgan (10) zugeordnet ist, das mit einem Druckteil (11) und mit einem Bremsteil (12) in Verbindung steht, wobei die Verbindung von Fühlerorgan (10), Bremsteil (12) und Druckteil (11) so gewählt ist, daß bei einem Anheben des Fühlerorganes (10) das Bremsteil (12) gegen den Boden gepreßt und das Druckteil (11) auf die Bremseinrichtung (5) so einwirkt, daß deren Bremswirkung auf das jeweilige hintere Rad (7) aufgehoben und durch die Bremswirkung des Bremsteiles (12) ersetzt ist.

2. Rolltreppengängiger Transportwagen (1) nach Anspruch 1, dadurch **gekennzeichnet,** daß die Bremsteile (12) hinter den hinteren Rädern (7) angeordnet sind.

3. Rolltreppengängiger Transportwagen (1) nach Anspruch 1 oder 2, dadurch **gekennzeichnet,** daß jedes Bremsteil (12) als ein nur in Schieberichtung des Transportwagens (1) drehbares Schubrad (12') gestaltet ist, das auf einer horizontalen Achse gelagert an einem Schwenkarm (8) angeordnet ist.

4. Rolltreppengängiger Transportwagen nach Anspruch 3, dadurch **gekennzeichnet,** daß jedes als Schubrad (12') gestaltete Bremsteil (12) der Wirkung einer einseitig wirkenden Drehsperre unterworfen ist.

5. Rolltreppengängiger Transportwagen (1) nach Anspruch 3 oder 4, dadurch **gekennzeichnet,** daß die Schubräder (12') als Stützmittel bei der Aufwärtsfahrt des Transportwagens (1) auf einer Rolltreppe (18) bestimmt sind.

6. Rolltreppengängiger Transportwagen (1) nach einem der Ansprüche 1 bis 5, dadurch **gekennzeichnet,** daß jedes Druckteil (11) als ein nach oben gerichtetes Teil gestaltet ist, das zur Bremseinrichtung (5) führt.

7. Rolltreppengängiger Transportwagen (1) nach einem der Ansprüche 1 bis 6, dadurch **gekennzeichnet,** daß jedes Fühlerorgan (10) als ein um eine horizontale Achse drehbares Rad gestaltet ist.

8. Rolltreppengängiger Transportwagen (1) nach einem der Ansprüche 1 bis 7, dadurch **gekennzeichnet,** daß dann, wenn sich eines der hinteren Räder (7) auf einer ebenen Fahrbahn befindet, das Fühlerorgan (10) und das Bremsteil (12) in einem Abstand zur Fahrbahn angeordnet sind.

9. Rolltreppengängiger Transportwagen (1) nach einem der Ansprüche 1 bis 8, dadurch **gekennzeichnet,** daß dann, wenn sich eines der hinteren Räder (7) auf einer ebenen Fahrbahn befindet, das Druckteil (11) keine Wirkung auf die Bremseinrichtung (5) ausübt.

10. Rolltreppengängiger Transportwagen (1) nach einem der Ansprüche 1 bis 9, dadurch **gekennzeichnet,** daß das Zusammenspiel von Bremsteil (12) und Bremseinrichtung (5) so gewählt ist, daß beim Herabsenken des Fühlerorganes (10) in die Ausgangslage (Abstand A) die Bremswirkung der Bremseinrichtung (5) vorher eintritt, bevor die Bremswirkung der Bremsteile (12) aufgehoben ist.

11. Rolltreppengängiger Transportwagen (1) nach einem der Ansprüche 1 bis 10, dadurch **gekennzeichnet,** daß bei jedem hinteren Rad (7) das Fühlerorgan (10), das Druckteil (11) und das Bremsteil (12) an einem Schwenkarm (8) angeordnet sind, der um die horizontale Achse (9) verschwenkbar gelagert ist.

12. Rolltreppengängiger Transportwagen (1) nach Anspruch 11, dadurch **gekennzeichnet,** daß die Lagerung der Schwenkarme (8) entweder an Radverkleidungen (13) der hinteren Räder (7) oder am Fahrgestell (2) vorgesehen ist.

13. Rolltreppengängiger Transportwagen (1) nach Anspruch 11 oder 12, dadurch **gekennzeichnet,** daß jeder Schwenkarm (8) neben einem hinteren Rad (7) angeordnet ist.

14. Rolltreppengängiger Transportwagen (1) nach einem der Ansprüche 11 bis 13, dadurch **gekennzeichnet,** daß jeder Schwenkarm (8) als gabelförmiges Teil gestaltet ist, dessen das Fühlerorgan (10) und das Druckteil (11) tragende Gabelschenkel jeweils ein hinteres Rad (7) umfassen.

15. Rolltreppengängiger Transportwagen (1) nach einem der Ansprüche 11 bis 14, dadurch **gekennzeichnet,** daß jeder Schwenkarm (8) gegen die Wirkung einer Druckfeder (16) bewegbar ist.

16. Rolltreppengängiger Transportwagen (1) nach einem der Ansprüche 11 bis 15, dadurch **gekennzeichnet,** daß jeder Schwenkarm (8) als zweiarmiger Hebel gestaltet ist, der an einem Hebelarm das Fühlerorgan (10) und das Druckteil (11) und am anderen Hebelarm das Bremsteil (12) trägt.

17. Rolltreppengängiger Transportwagen (1) nach einem der Ansprüche 11 bis 16, dadurch **gekennzeichnet,** daß zumindest das Fühlerorgan (10) und das Bremsteil (12) in unterschiedlichen Positionen am Schwenkarm (8) befestigbar sind.

18. Rolltreppengängiger Transportwagen (1) nach einem der Ansprüche 11 bis 17, dadurch **gekennzeichnet,** daß jedes Bremsteil (12) federbeaufschlagt am Schwenkarm (8) gelagert ist.

19. Rolltreppengängiger Transportwagen (1) nach einem der Ansprüche 11 bis 18, dadurch **gekennzeichnet,** daß die hinteren Räder (7) als Zwillingslaufräder gestaltet sind und daß jeder Schwenkarm (8) zwischen den zwei Laufrädern eines hinteren Rades (7) angeordnet ist.

## Claims

1. A manually movable trolley (1) adapted to escalators and, alternatively, suitable for travelators, comprising a wheel frame (2) having at least one depositing region (3) on which objects may be deposited, and a pushing arrangement (4) connected to a braking arrangement (5) acting on the rear wheels (7) of the trolley (1) in such a manner that, when the pushing arrangement (4) is released, the rear wheels (7) are braked and, when the pushing arrangement (4) is operated, the braking action can be released, characterised in that a preceding detector (10), pivotable about a horizontal axis (9), is associated with each rear wheel (7) and is connected to a pressure part (11) and a braking part (12), the connection between the detector (10), braking part (12) and pressure part (11) being such that, when the detector (10) is raised, the braking part (12) is pressed against the ground and the pressure part (11) acts on the braking arrangement (5) in such a manner that the braking action thereof on the respective rear wheel (7) is released and replaced by the braking action of the braking part (12).

2. A trolley (1) adapted to escalators according to claim 1, characterised in that the braking parts (12) are arranged behind the rear wheels (7).

3. A trolley (1) adapted to escalators according to claim 1 or 2, characterised in that each braking part (12) is constructed as a pushing wheel (12') which is rotatable only in the pushing direction of the trolley (1), is mounted on a horizontal axis and is arranged on a swivel arm (8).

4. A trolley (1) adapted to escalators according to claim 3, characterised in that each braking part (12), constructed as a pushing wheel (12'), is subjected to the action of a rotation lock acting in one direction.

5. A trolley (1) adapted to escalators according to claim 3 or 4, characterised in that the pushing wheels (12') act as supporting means when the trolley (1) is traveling upwards on an escalator (18).

6. A trolley (1) adapted to escalators according to any one of claims 1 to 5, characterised in that each pressure part (11) is constructed as an upwardly extending part leading to the braking arrangement (5).

7. A trolley (1) adapted to escalators according to any one of claims 1 to 6, characterised in that each detector (10) is constructed as a wheel rotatable about a horizontal axis.

8. A trolley (1) adapted to escalators according to any one of claims 1 to 7, characterised in that, when one of the rear wheels (7) is on a level traveling surface, the detector (10) and the braking part (12) are arranged at a distance from the floor.

9. A trolley (1) adapted to escalators according to any one of claims 1 to 8, characterised in that, when one of the rear wheels (7) is on a level traveling surface, the pressure part (11) has no effect on the braking arrangement (5).

10. A trolley (1) adapted to escalators according to any one of claims 1 to 9, characterised in that the interaction between the braking part (12) and the braking arrangement (5) is such that, when the detector (10) is lowered into the starting position (distance A), the braking action of the braking arrangement (5) comes into effect before the braking action of the braking parts (12) is released.

11. A trolley (1) adapted to escalators according to any one of claims 1 to 10, characterised in that, for each rear wheel (7), the detector (10), the pressure part (11) and the braking part (12) are arranged on a swivel arm (8) mounted so as to pivot about the horizontal axis (9).

12. A trolley (1) adapted to escalators according to claim 11, characterised in that the mounting of the swivel arms (8) is provided either on wheel casings (13) of the rear wheels (7) or on the wheel frame (2).

13. A trolley (1) adapted to escalators according to claim 11 or 12, characterised in that each swivel arm (8) is arranged next to a rear wheel (7).

14. A trolley (1) adapted to escalators according to any one of claims 11 to 13, characterised in that each swivel arm (8) is constructed as a forked part, of which the fork arms carrying the detector (10) and the pressure part (11) each enclose a rear wheel (7).

15. A trolley (1) adapted to escalators according to any one of claims 11 to 14, characterised in that each swivel arm (8) is movable against the action of a compression spring (16).

16. A trolley (1) adapted to escalators according to any one of claims 11 to 15, characterised in that each swivel arm (8) is constructed as a two-armed lever carrying the detector (10) and the pressure part (11) on one lever arm and the braking part (12) on the other lever arm.

17. A trolley (1) adapted to escalators according to any one of claims 11 to 16, characterised in that at least the detector (10) and the braking part (12) are fixable to the swivel arm (8) in various positions.

18. A trolley (1) adapted to escalators according to any one of claims 11 to 17, characterised in that each braking part (12) is mounted under spring load on the swivel arm (8).

19. A trolley (1) adapted to escalators according to any one of claims 11 to 18, characterised in that the rear wheels (7) are constructed as twin castors and in that each swivel arm (8) is arranged between the two castors of a rear wheel (7).

## Revendications

1. Chariot transporteur (1) déplaçable manuellement, qu'on peut emporter sur les escaliers mécaniques et qui est utilisable aussi, si désiré, sur des trottoirs (ou des tapis) roulants, comprenant un châssis (2), qui présente au moins une zone (3) pour poser des objets, et un dispositif de poussée (4) qui est relié à un dispositif de freinage (5), agissant sur les roues arrière (7) du chariot (1), de manière que, lorsque le dispositif de poussée (4) est lâché, les roues arrière (7) puissent être freinées et, lorsque le dispositif de poussée (4) est actionné, l'action de freinage puisse être supprimée, **caractérisé** en ce qu'un organe palpeur (10) est coordonné à chaque roue arrière (7), organe palpeur qui précède la roue à laquelle il est coordonné, peut être animé d'un basculement autour d'un axe horizontal (9) et est en liaison avec une pièce de poussée ou d'écartement (11) et une pièce de freinage (12), la liaison entre l'organe palpeur (10), la pièce de freinage (12) et la pièce d'écartement (11) étant choisie pour que, lorsque l'organe palpeur (10) est soulevé, la pièce de freinage (12) soit pressée contre le sol et la pièce d'écartement (11) agisse sur le dispositif de freinage (5), de manière que son action de freinage sur la roue arrière (7) concernée soit supprimée et remplacée par l'action de freinage de la pièce de freinage (12).

2. Chariot transporteur (1) qu'on peut emporter sur les escaliers mécaniques, selon la revendication 1, caractérisé en ce que les pièces de freinage (12) sont disposées derrière les roues arrière (7).

3. Chariot transporteur (1) qu'on peut emporter sur les escaliers mécaniques, selon la revendication 1 ou 2, caractérisé en ce que chaque pièce de freinage (12) est réalisée sous la forme d'un galet de poussée (12') qui peut seulement être animé d'une rotation dans la direction de poussée du chariot transporteur (1) et qui est monté rotatif autour d'un axe horizontal sur un bras basculant (8).

4. Chariot transporteur (1) qu'on peut emporter sur les escaliers mécaniques, selon la revendication 3, caractérisé en ce que chaque pièce de freinage (12), réalisée sous la forme d'un galet de poussée (12'), est soumise à l'action d'un blocage en rotation qui agit seulement dans un sens.

5. Chariot transporteur (1) qu'on peut emporter sur les escaliers mécaniques, selon la revendication 3 ou 4, caractérisé en ce que les galets de poussée (12') sont destinés à agir comme des moyens d'appui lors du transport vers le haut du chariot transporteur (1) sur un escalier mécanique (17).

6. Chariot transporteur (1) qu'on peut emporter sur les escaliers mécaniques, selon une des revendications 1 à 5, caractérisé en ce que chaque pièce d'écartement (11) est réalisée sous la forme d'une partie ou d'une pièce dirigée vers le haut et menant au dispositif de freinage (5).

7. Chariot transporteur (1) qu'on peut emporter sur les escaliers mécaniques, selon une des revendications 1 à 6, caractérisé en ce que chaque organe palpeur (10) est réalisé sous la forme d'un galet rotatif autour d'un axe horizontal.

8. Chariot transporteur (1) qu'on peut emporter sur les escaliers mécaniques, selon une des revendications 1 à 7, caractérisé en ce que, lorsque l'une des roues arrière (7) se trouve sur une surface de roulement plane, l'organe palpeur (10) et la pièce de freinage (12) sont situés à distance de la surface de roulement.

9. Chariot transporteur (1) qu'on peut emporter sur les escaliers mécaniques, selon une des revendications 1 à 8, caractérisé en ce que, lorsque l'une des roues arrière (7) se trouve sur une surface de roulement plane, la pièce d'écartement (11) n'agit pas sur le dispositif de freinage (5).

10. Chariot transporteur (1) qu'on peut emporter sur les escaliers mécaniques, selon une des revendications 1 à 9, caractérisé en ce que la coopération de la pièce de freinage (12) et du dispositif de freinage (5) a été choisie pour que, lorsque l'organe palpeur (10) est abaissé à la position de départ (distance A), l'action de freinage du dispositif de freinage (5) commence avant que l'action de freinage des pièces de freinage (12) ne soit supprimée.

11. Chariot transporteur (1) qu'on peut emporter sur les escaliers mécaniques, selon une des revendications 1 à 10, caractérisé en ce que, pour chaque roue arrière (7), l'organe palpeur (10), la pièce d'écartement (11) et la pièce de freinage (12) sont disposés sur un bras basculant (8) pouvant être animé d'un basculement autour de l'axe horizontal (9).

12. Chariot transporteur (1) qu'on peut emporter sur les escaliers mécaniques, selon la revendication 11, caractérisé en ce que les bras basculants (8) sont montes sur des recouvrements (13) des roues arrière (7) ou sur le châssis (2).

13. Chariot transporteur (1) qu'on peut emporter sur les escaliers mécaniques, selon la revendication 11 ou 12, caractérisé en ce que chaque bras basculant (8) est placé à côté d'une roue arrière (7).

14. Chariot transporteur (1) qu'on peut emporter sur les escaliers mécaniques, selon une des revendications 11 à 13, caractérisé en ce que chaque bras basculant (8) est réalisé sous la forme d'une pièce fourchue dont les branches de fourche, portant l'organe palpeur (10) et la pièce d'écartement (11), entourent chaque fois une roue arrière (7).

15. Chariot transporteur (1) qu'on peut emporter sur les escaliers mécaniques, selon une des revendications 11 à 14, caractérisé en ce que chaque bras basculant (8) peut être animé d'un basculement contre la force d'un ressort de compression (16).

16. Chariot transporteur (1) qu'on peut emporter sur les escaliers mécaniques, selon une des revendications 11 à 15, caractérisé en ce que chaque bras basculant (8) est réalisé sous la forme d'un levier à deux bras, levier qui porte l'organe palpeur (10) et la pièce d'écartement (11) sur un bras de levier et qui porte la pièce de freinage (12) sur l'autre bras de levier.

17. Chariot transporteur (1) qu'on peut emporter sur les escaliers mécaniques, selon une des revendications 11 à 16, caractérisé en ce que l'organe palpeur (10) et la pièce de freinage (12) au moins peuvent être fixés en différentes positions au bras basculant (8).

18. Chariot transporteur (1) qu'on peut emporter sur les escaliers mécaniques, selon une des revendications 11 à 17, caractérisé en ce que chaque pièce de freinage (12) est montée sur le bras basculant (8) en étant chargée par ressort.

19. Chariot transporteur (1) qu'on peut emporter sur les escaliers mécaniques, selon une des revendications 11 à 18, caractérisé que chacune des roues arrière (7) est réalisée sous la forme d'une double roulette et que chaque bras basculant (8) est disposé entre les deux roulettes élémentaires d'une roue arrière (7).
